# EUROPEAN PATENT APPLICATION

(11) **EP 4 603 373 A1**
(43) Date of publication of application: **20.08.2025**
(21) Application number: 24157615.6
(22) Date of filing: 14.02.2024
(51) Int. Cl.: B62J 43/16, B62J 43/20, B62J 27/00, B62J 45/20, B62J 45/41, B62K 21/00, B62K 23/00, B62D 37/04, B60K 1/04, B60L 50/64, B60L 50/60, B60W 30/04, B60W 30/045, B60W 30/18

(54) **ELECTRIC TWO-WHEELED VEHICLE WITH TILTING ANGLE CONTROL**

(71) Applicant: ARSIMA PROJECTS BV, 1180 Ukkel (BE)
(72) Inventor: VAN WUNNIK, Martin, 1180 Ukkel (BE)
(74) Representative: V.O.

(57) **Abstract**

The present disclosure relates to and electric two-wheeled vehicle (1) comprising at least a main frame (2), a front wheel (3) coupled to a front side of the main frame, a rear wheel (4) coupled to a rear side of the main frame, an electric motor for driving the rear wheel and/or front wheel, and a battery (7) supported by the main frame and configured for powering said electric motor, and wherein a central plane (CP) associated to the main frame is dividing the main frame into a left half and a right half. The battery or at least a portion of the battery is moveable with respect to the main frame, and the two-wheeled vehicle comprises a steering aid system (10) for reducing a tilting angle of the two-wheeled vehicle when taking a left or a right turn. The steering aid system comprises a movement mechanism (11) configured for moving a position of a centre of mass of the battery with respect to the central plane, a direction signaling device (12) configured for generating at least a first signal signaling entering a left turn, a second signal signaling coming-out of the left-turn, a third signal signaling entering a right turn and a fourth signal signaling coming-out of the right turn, and a controller (13) configured for controlling the movement mechanism in response to the signals from the direction signaling device.

## Description

### FIELD OF THE INVENTION

The invention relates to a two-wheeled vehicle, more specifically an electric two-wheeled vehicle driven by an electric motor powered by a battery.

### BACKGROUND

Vehicles such as cars, trucks and motorbikes are major contributors to greenhouse gas emissions due to fuel combustion. In view of the climate change and the goal of reaching zero-emission in the coming decades, carbon emission in the transport sector should strongly be reduced and a transition from combustion engines to zero-emission engines, such as electrical engines, has started and will further expand.

Although, two-wheeled vehicles, such as for example motorcycles and scooters, do not pollute as much as trucks and cars, in view of the zero emission goal, for instance various motorcycle manufacturers have already brought new models of electric motorcycles on the market. Others plan to follow soon.

These electric motorcycles or scooters not only have no tailpipe emissions, they also make virtually no noise. Generally, the direct driving cost per km is also more favorable for electric motorcycles when compared to petrol fueled motorcycles.

When considering the design of two-wheeled vehicles, two major differences compared to combustion engine two-wheeled vehicles are the total weight of the vehicle and the weight distribution of the various components of the two-wheeled vehicle.

The heaviest weight component of an electric two-wheeled vehicle, such as for example an electric motorcycle, is the battery, also named battery pack, which generally has a weight that is larger than the weight of a combustion engine and petrol tank all together. For example, for a Li-ion battery pack weights can range between 50 and 100 kg depending on what driving autonomy is required with a single charge.

The design of an electric motorcycle, or more generally an electric two-wheeled vehicle, with respect to its total weight and weight distribution are important factors in view of the ability to stabilize the vehicle during driving, especially while taking turns. Until today, the design of most electric motorcycles greatly follows the historical design logic applied for petrol fueled motorcycles.

Hence, in view of optimizing riding comfort and improving safety, there is room for improving the design of electric motorcycles, and more generally electric two-wheeled vehicles.

### SUMMARY

It is an object of the present disclosure to provide an electric two-wheeled vehicle with improved riding comfort and improved safety. More specifically, the object is to improve the steering control of an electric two-wheeled vehicle when taking turns.

The present disclosure is defined in the appended independent claims. The dependent claims define advantageous embodiments.

According to an aspect of the invention, an electric two-wheeled vehicle is provided. The two-wheeled vehicle comprises at least a main frame, a front wheel coupled to a front side of the main frame, a rear wheel coupled to a rear side of the main frame, an electric motor for driving the rear wheel and/or front wheel, and a battery supported by the main frame and configured for powering the electric motor, and wherein a central plane associated to the main frame is dividing the main frame into a left half and a right half. The battery or at least a portion of the battery is moveable with respect to the main frame and the two-wheeled vehicle comprises a steering aid system for reducing a tilting angle of the two-wheeled vehicle when taking a left or a right turn.

The steering aid system comprises a movement mechanism, a direction signaling device and a controller.

The movement mechanism is configured for moving a position of a centre of mass of the battery with respect to the central plane between a start position located on the central plane and a first end position located outside of the central plane on a left-hand side of the central plane, and for moving the position of the centre of mass between the start position and a second end position located outside the center plane on a right-hand side of the central plane.

The direction signaling device is configured for generating at least a first signal signaling entering a left turn, a second signal signaling coming-out of the left-turn, a third signal signaling entering a right turn and a fourth signal signaling coming-out of the right turn.

The controller is configured for: a) moving the centre of mass from the start position towards the first end position if the first signal is generated, and if the second signal is subsequently generated moving the centre of mass back to the start position, and b) moving the centre of mass from the start position towards the second end position if the third signal is generated, and if the fourth signal is subsequently generated moving the centre of mass back to the start position.

When the wording left and right, left-hand and right-hand, or left-half and right-half, are used throughout the present disclosure, left and right are specified from a perspective of a rider when seated on the seat of the two-wheeled vehicle facing forward for steering the two-wheeled vehicle.

The tilting angle of a two-wheeled vehicle, such as for example a motorcycle, is also known as the roll angle. Depending on the speed and curvature of the turn, the motorcycle will tilt with a given tilting angle around the tilting axis. Generally, the tilting angle is defined as an angle measured between the central plane of the motorcycle and a vertical plane V perpendicular to a road surface H the motorcycle is riding on such that when the tilting angle is zero the central plane is parallel with the vertical plane.

A reduction of the tilting angle of the two-wheeled vehicle when taking a left or a right turn corresponds to a difference in tilting angle when taking the same left or right turn at a same speed with the steering aid system deactivated and the steering aid system activated.

Entering a left turn and entering a right turn corresponds to a point in time when the two-wheeled vehicle makes a transition from driving along a straight line portion to entering a curved line portion of respectively the left and right turn.

Generally, entering a left and a right turn corresponds to the moment in time the rider of the two-wheeled vehicle starts inclining the two-wheeled vehicle for taking respectively the left and right turn.

Coming-out of the left-turn and coming out of the right turn corresponds to a point in time when the two-wheeled vehicle has reached an apex of respectively the left or right turn.

The apex of a turn is generally a point on the inside of a turn that the two-wheeled vehicle passes closest to when taking the turn. The exact location of the apex, and hence the moment of coming-out of the left turn depends on various factors such as the speed of the two-wheeled vehicle and the turn radius of the turn, more generally the location of the apex depends on the overall line that is followed by the two-wheeled vehicle for taking the turn. Coming-out of the turn may also be understood as the start of a turn exit phase.

Generally, coming-out of the left and coming-out of the right turn corresponds to a point in time when the rider of the two-wheeled vehicle starts reducing the inclination of the two-wheeled vehicle for exiting respectively the left turn and the right turn.

Advantageously, by providing a steering aid system that moves the center of mass of the battery to a left-hand side and a right-hand side with respect to the central plane when taking respectively a left and right turn, the total center of mass of the two-wheeled vehicle including the weight of the rider, or if one or more passengers are present the combined weight of rider and the one or more passengers, is moved to respectively the left-hand side and the right-hand side. By doing so, for a given speed of the two-wheeled vehicle, when taking a left or right turn, the required tilting angle of the two-wheeled vehicle will be reduced.

Advantageously by activating such steering aid system, the safety of the rider is increased as turns can be taken at a reduced tilting angle without reducing the speed of the two-wheeled vehicle.

When mentioning the weight of the rider further in this document it means the weight of a single rider, or the combined weight of the rider and one or more passengers.

Preferably, the two-wheeled vehicle comprises a speed sensor for monitoring a speed of the two-wheeled vehicle and the controller is configured for starting the centre of mass to move from the start position to the first or second end position only on condition that the speed is above a first speed reference value and/or wherein the controller is configured for moving the centre of mass back to the start position if the speed is dropping below a second speed reference value, preferably the second reference value is equal to or lower than the first speed reference value. Advantageously, the safety of the rider is hereby increased.

Generally, the movement mechanism comprises any of: a driving motor, a pneumatic device, a hydraulic device or a combination thereof, for driving the movement of the battery or the portion of the battery relative to the main frame.

In embodiments, the movement mechanism comprises a battery rotation axis for rotating the battery with respect to the central plane to the left-hand side and to the right-hand side of the central plane up to a maximum angle such that by rotating the battery to the left-hand side by the maximum angle the position of the centre of mass of the battery is moving from the start position on the central plane to the first end position outside the central plane and by rotating the battery to the right-hand side by the maximum angle the position of the centre of mass of the battery is moving from the start position on the central plane to the second end position outside the central plane. Preferably the battery rotation axis is located in the central plane.

In other embodiments, the battery comprises a plurality of battery modules and the movement mechanism comprises a translation mechanism configured for translating one or more of the battery modules in a direction transverse, preferably perpendicular, to the central plane, such that the position of the centre of mass of the battery is variable by translating the one or more battery modules with respect to the central plane.

In embodiments, the direction signaling device comprises at least a first and a second button configured for manually triggering the first, second, third and fourth signal, preferably the first and second buttons are hand-controlled or feet-controlled buttons.

In embodiments, the direction signaling device may be a voice-controlled direction signaling device comprising a microphone for receiving at least four pre-defined keywords expressed by a rider of the two-wheeled vehicle for triggering the generation of respectively the first, second, third and fourth signal, preferably the microphone is attachable to a helmet of the rider. In these embodiments, the voice-controlled direction signaling device is configured for generating the first, second, third or fourth signal when a corresponding key-word is received through the microphone.

In further embodiments, the direction signaling device comprises a road detection device configured for monitoring a road followed by the two-wheeled vehicle, and a data processing apparatus configured for receiving data from the road detection device and for identifying an upcoming left turn and an upcoming right turn, preferably the road detection device comprises any of a camera, a radar, a lidar, a gps navigation system, or a combination thereof.

Generally, for embodiments comprising a road detection device, the data processing apparatus is configured for generating the first signal when the left turn identified reaches a point on the road for starting entering the identified left turn, generating the second signal when reaching a point on the road for starting coming-out of the left turn identified, generating the third signal when the right turn identified reaches a point on the road for starting entering the identified right turn, and generating the fourth signal if reaching a point on the road for starting coming-out of the right turn identified. In embodiments, the data processing apparatus may be configured to apply a AI algorithm for generating the first, second, third and fourth signals.

In embodiments, the steering aid system is configured for reducing the tilting angle of the two-wheeled vehicle when taking a left or a right turn by at least 4°, preferably by at least 6°, more preferably by at least 8°, and wherein the reduction of the tilting angle is defined as a difference in tilting angle observed when taking the same left or right turn at the same speed with the steering aid system activated and deactivated for a rider having a weight equal or lower than 100 kg or for a rider and passenger having a combined weight equal or lower than 100 kg.

In embodiments, the steering aid system is configured such that when no rider and no passenger is seated on the two-wheeled vehicle and when moving the centre of mass of the battery from the start position to the first end position the centre of mass of the two-wheeled vehicle is rotated towards the left-hand side of the central plane by a maximum angle, and when moving the centre of mass of the battery from the start position to the second end position the centre of mass of the two-wheeled vehicle is rotated towards the right-hand side of the central plane by the maximum angle, and wherein the rotation of the centre of mass of the two-wheeled vehicle is around a tilting axis of the two-wheeled vehicle, wherein the tilting axis is defined as an intersection between the central plane and a riding plane the front and rear wheel are resting on, and wherein the maximum angle is at least least 10°, preferably at least 15°, more preferably at least 20°.

### BRIEF DESCRIPTION OF THE FIGURES

The present disclosure will be further explained with reference to the accompanying drawings, in which:
Fig. 1 schematically shows a side view of an exemplary embodiment of a two-wheeled vehicle according to the present disclosure;
Fig.2 schematically illustrates forces acting on a motorcycle when taking a turn;
Fig. 3a schematically shows a cross-sectional view of a main frame, a central plane CP dividing the main frame in a left half and a right half, and a battery, and wherein the centre of mass of the battery M_{B} is located in the central plane;
Fig.3b and Fig.3c corresponds to Fig.3a wherein the battery is rotated on a low-positioned longitudinal axis with respect to the main frame to respectively a left-hand side and right-hand side of the central plane such that the centre of mass of the battery M_{B} is located outside the central plane.
Fig.3d to Fig.3f schematically illustrate rotation of the battery with respect to the main frame for an embodiment wherein the battery rotation axis is a high-positioned longitudinal axis;
Fig.4a schematically shows a cross-sectional view of the motorcycle shown on Fig.1 and wherein the motorcycle is positioned upright for driving along a straight line;
Fig.4b schematically shows a cross-sectional view of the motorcycle of Fig.4a when tilted by 45° for taking a left turn without activation of the steering aid system;
Fig.4c schematically shows a cross-sectional view of the motorcycle of Fig.4a when taking the same left turn as in Fig.4b and driving at the same speed, wherein the steering aid system has rotated the battery by 20°, and wherein the tilting angle is thereby reduced from 45° to 30°;
Fig.5a schematically illustrates a segmented battery wherein the centre of mass of the battery is located in the central plane;
Fig.5b and Fig.5c schematically illustrates the battery of Fig.5a wherein an embodiment of a translation based steering aid system has moved the centre of mass of the battery outside the central plane to respectively a left-hand side and right-hand side of the central plane ;
Fig.5d and Fig.5e schematically illustrates the battery of Fig.5a wherein a further embodiment of a translation based steering aid system has moved the centre of mass of the battery outside the central plane to respectively a left-hand side and right-hand side of the central plane;
Fig. 6 schematically shows components of a steering aid system comprising a movement mechanism, a direction signaling device and a controller;
Fig. 7a is a model representation of a motorcycle tilted by a tilting angle φ and wherein the steering aid system is not activated and hence wherein the positions of the centre of mass of the battery M_{B}, the centre of mass of motorcycle without the weight of the battery but including the weight of the rider M_{MR}, and the position of the total centre M_{T} are shown to be located on the central plane;
Fig.7b is a model representation wherein the steering aid system is activated and wherein the battery is rotated by an angle α, and wherein the position of the total centre of mass M_{T} is moved out of the central plane and results in a reduction Δφ of the tilting angle;
Fig.8 shows the results of a model calculation illustrating an example of a reduction Δφ of the tilting angle that can be obtained as function of a rotation angle α of the battery and wherein the riders weight was set to 80 kg;
Fig.9 shows the results of a model calculation illustrating an example of a maximum reduction of the tilting angle as function of a rotation angle of the battery that theoretically would be obtained if nobody would be seated on the vehicle, as if the weight of the rider or if applicable the combined weight of rider and passengers is 0kg.

### DETAILED DESCRIPTION

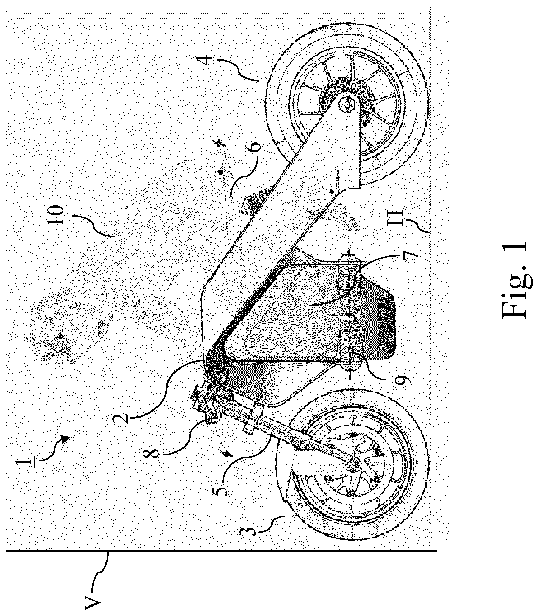

With reference to Fig.1, a schematic representation is shown of an exemplary embodiment of an electric two-wheeled vehicle, according to the present disclosure. In this example, an electric motorcycle 1 is shown but the present disclosure is not limited to motorcycles, the present disclosure relates to any type of electric two-wheeled vehicle such as electric scooters, electric motorcycles or any other type of electric two-wheeled vehicle.

The electric two-wheeled vehicle 1 according to the present disclosure has to be construed as a two-wheeled vehicle having an electric motor powered by a battery. Hence, the two-wheeled vehicle comprises at least a main frame 2, a front wheel 3 coupled to the front side of the main frame, a rear wheel 4 coupled to the rear side of the main frame, an electric motor for driving the rear wheel and/or front wheel, and a battery 7 supported by the main frame 2 and configured for powering the electric motor.

In embodiments as illustrated on Fig.1, the front wheel 3 may be coupled to the front side of the main frame 2 with a fork 5, e.g. a telescopic fork, and a handle bar 8 may be coupled to the fork 5. Typically, the electric two-wheeled vehicle further comprises a seat 6 for the rider 10 which may be coupled to the main frame 2.

The battery 7 is also known as battery pack. In embodiments, the battery is for example a Li-ion battery pack. The weight of the battery may for example range between 50 and 100 kg depending on what driving autonomy is required with a single charge of the battery.

In embodiments, the electrical motor, not shown on Fig. 1, may for example be a permanent magnet, e.g. brushless, electrical motor. In embodiments, the electrical motor may be attached to the main frame and power may be transmitted to the rear wheel through a chain, belt, drive or cardan shaft, or other.

The main frame 2 is also known as the chassis of the two-wheeled vehicle. The main frame is a rigid structure configured to support the weight of most of the components of the two-wheeled vehicle, such as for instance the battery and the electric motor, and also the weight of the rider 10.

Depending on the embodiment, the main frame may be a monocoque frame or may be a tubular frame wherein multiple tubes are coupled together. The main frame may be made of a light weight material such as for example any of the materials: steel, aluminum or carbon fibre or a combination of these and other materials. Although different shapes and structures might be considered for the main frame, for example a backbone frame, a single or double cradle frame, a perimeter frame, the present disclosure is however not limited to a specific geometry of the main frame.

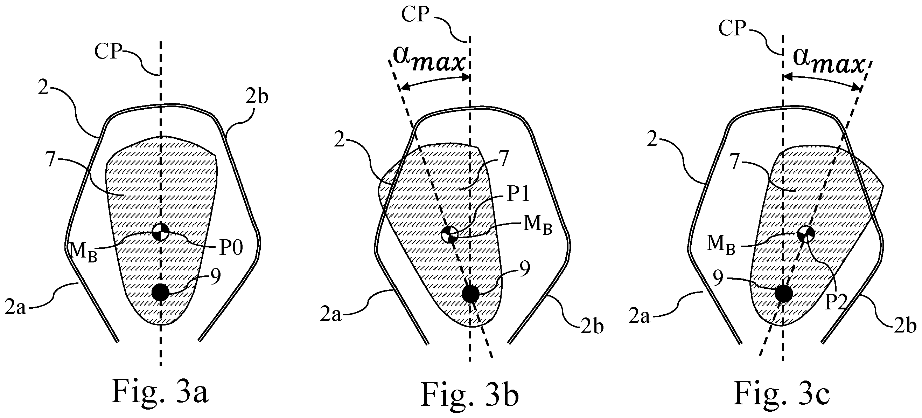

As schematically illustrated on Fig.3a to Fig.3f, Fig.4a to Fig.4c and Fig.5a to Fig.5e, a central plane CP is associated to the main frame 2. The central plane CP is dividing the main frame into a left half 2a and a right half 2b of the main frame. The central plane CP has to be construed as a plane that is fixed with respect to the main frame. In embodiments, the central plane CP may be a plane of symmetry for the main frame 2.

Generally, the central plane of the main frame is also a plane that divides the entire two-wheeled vehicle into a left-hand side and a right-hand side.

The electric two-wheeled vehicle 1 according to the present disclosure is characterized in that the battery 7 or at least a portion of the battery is moveable with respect to the main frame 2, and in that the two-wheeled vehicle comprises a steering aid system 10 for reducing the tilting angle φ of the two-wheeled vehicle when taking a left or a right turn.

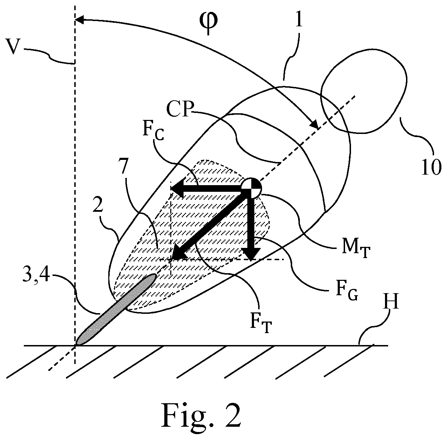

With reference to Fig.2, an example is schematically shown of a motorcycle taking a turn with a tilting angle φ and the major forces acting on a motorcycle when taking a turn are indicated.

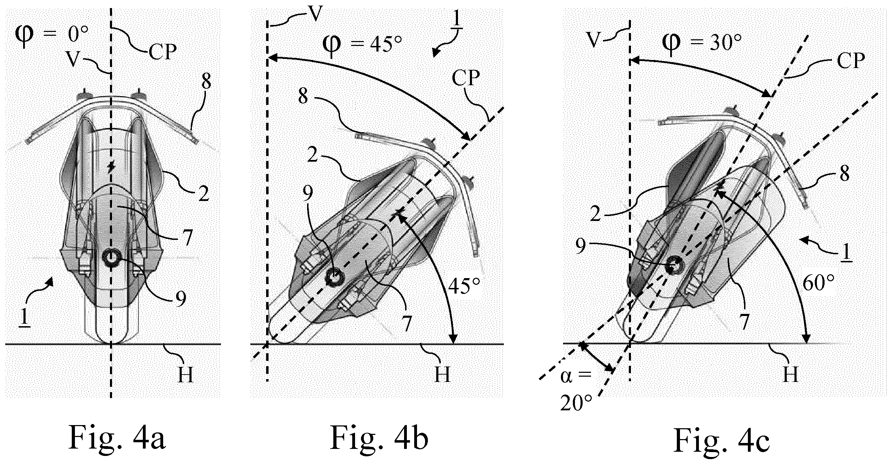

As schematically illustrated on Fig.2, the tilting angle of the two-wheeled vehicle, in this example a motorcycle, is measured with respect to a vertical plane V that is perpendicular to a road surface H the motorcycle is driving on. When the motorcycle makes a roll motion for making a turn, the entire motorcycle including the main frame 2 tilts and hence the tilting angle φ corresponds to the tilting angle of the central plane CP with respect to the vertical plane V. When the motorcycle is positioned upward for driving along a straight line as shown on Fig.4 and Fig.4a, the central plane CP is parallel with the vertical plane V and hence the tilting angle is zero.

When taking a turn with the a two-wheeled vehicle, e.g. a motorcycle or a scooter, forces acting on the total centre of mass M_{T}, i.e. the centre of mass resulting from the weight of the motorcycle including the weight of the battery and combined with the weight of the rider and any passenger if present, are schematically shown on Fig.2. These forces are the centrifugal force F_{C} and the gravitational force F_{G}, which sum up to a total force F_{T}. Remark that the tilting angle φ shown on Fig.2 is an ideal tilting angle ignoring gyroscopic moments. In practice, due to the gyroscopic moments, the tilting angle is increased when compared to the ideal tilting angle taking only the centrifugal and gravitational forces into account.

When taking a left or a right turn with a two-wheeled vehicle, the required tilting angle φ depends on the speed of the two-wheeled vehicle and on the curvature of the turn, i.e. the radius of the turn. The tilting angle, especially when driving at higher speeds, may be relatively large and this might lead to unsafe situations or a discomfort for the average rider. Discomfort can be experienced for tilting angles greater than 20 to 25 degrees. In Fig.4b, as an example, a tilting angle φ of 45° is shown.

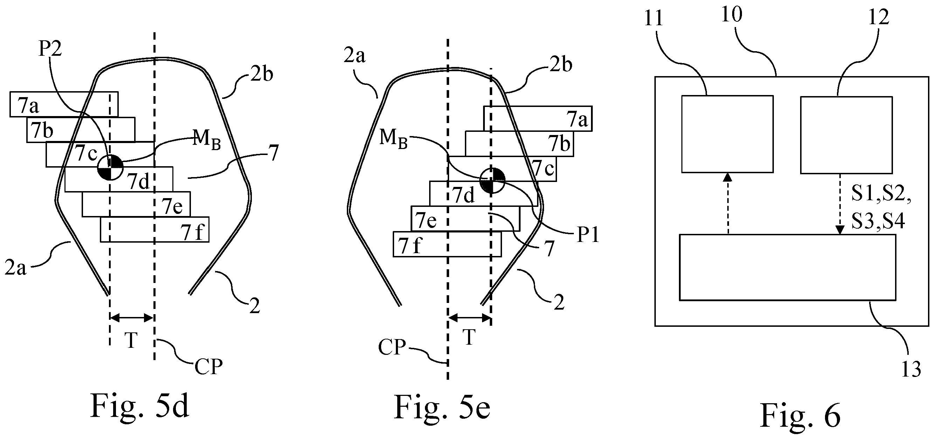

To reduce the tilting angle when taking a left or a right turn, the electric two-wheeled vehicle according to the present disclosure is provided with a steering aid system 10, which is schematically illustrated on Fig.6.

The steering aid system 10 comprises a movement mechanism 11 configured for moving a position of the centre of mass M_{B} of the battery 7 with respect to the central plane CP. More specifically, a first movement for taking a left turn is provided for moving the centre of mass M_{B} of the battery 7 between a start position P0 located on the central plane CP and a first end position P1 located outside of the central plane on a left-hand side of the central plane, and a second movement for taking a right turn is provided for moving the centre of mass M_{B} between the start position P0 and a second end position P2 located outside the center plane on a right-hand side of the central plane.

The start position P0 may also be named neutral position as it corresponds to the position of the centre of mass M_{B} of the battery if no steering aid system is active, generally when riding on a straight line. When in the neutral position, basically half of the weight of the battery is located on the left-hand side of the central plane and another half of the weight of the battery is located on the right-hand side of the central plane.

The movement mechanism 11 may comprise any of: a driving motor, a pneumatic device and a hydraulic device or a combination thereof, for driving the movement of the battery 7 or the portion of the battery 7 relative to the main frame 2. Various detailed embodiments of a movement mechanism 11 will be discussed below in more detail.

The movement of the battery with respect to the main frame is a controlled movement. Thereto, the steering system 10 further comprises a direction signaling device 12 and a controller 13 for controlling the movement mechanism in response to the signals received from the direction signaling device. As further discussed below, the direction signaling device 12 may be a rider controlled device, a fully automated device or a combination of both.

The direction signaling device 12 is configured for generating at least a first signal S1 signaling entering a left turn, a second signal signaling coming-out of the left-turn S2, a third signal S3 signaling entering a right turn and a fourth signal S4 signaling coming-out of the right turn.

The controller 13 is configured for: a) moving the centre of mass M_{B} from the start position P0 towards the first end position P1 if the first signal S1 is generated, and if subsequently the second signal S2 is generated moving the centre of mass back to the start position P0, and b) moving the centre of mass from the start position P0 towards the second end position P2 if the third signal S3 is generated, and if subsequently the fourth signal S4 is generated moving the centre of mass back to the start position P0.

As schematically shown on Fig.6, in embodiments, the controller 13 may be configured to send instructions, indicated with an arrow, from the controller 13 to the movement mechanism 11, in response to the signals S1, S2, S3, S4 received from the signaling device 12.

Generally, the controller 13 may be configured for continuing the movement of the centre of mass M_{B} from the start position towards the first end position P1 until the first end position is reached unless the second signal is generated before reaching the first end position. Similarly, the movement of the centre of mass M_{B} from the start position towards the second end position P2 may be continued until the second end position is reached unless the fourth signal is generated before reaching the second end position.

Hence, if the second signal S2 or the fourth signal S4 are generated, the centre of mass M_{B} of the battery may not necessarily already have reached respectively the first and second end position. When the second or fourth signal is generated before reaching respectively the first and second end position, the centre of mass may be moved back to the start position.

In embodiments, the steering aid system 10 may be manually activated or deactivated with for example a voice control device or an activation button, e.g. attached to the handlebar.

With reference to Fig.4b and Fig.4c, an example is shown of a motorcycle taking the same turn at the same speed wherein the steering aid system 10 is respectively deactivated and activated. In this example, with the steering aid system deactivated, the tilting angle is 45°, as shown on Fig.4b, and if the steering system is activated, the tilting angle is 30° as shown on Fig.4c. Hence in this example a reduction of 15° in tilting angle while keeping the same speed is obtained by moving the centre of mass of the battery.

In embodiments, the two-wheeled vehicle comprises a speed sensor for monitoring the speed of the two-wheeled vehicle. In these embodiments, the controller may be configured for starting the centre of mass M_{B} to move from the start position P0 to the first P1 or second P2 end position only on condition that the speed is above a first speed reference value. In this way, safety is increased, especially if turns would be taken at low speed. Indeed, due to the laws of nature and physics, moving the battery with respect to the main frame when driving at too low speed may result in an unstable two-wheeled vehicle.

In embodiments, the two-wheeled vehicle may comprise a user interface indicating that the speed is too low for activating the steering aid system 10.

In embodiments comprising a speed sensor, the controller may also be configured for moving the centre of mass M_{B} back to the start position P0 if the speed is dropping below a second speed reference value. Preferably the second reference value is equal to or lower than the first speed reference value.

In embodiments, the first and/or second speed reference value may be configurable parameters.

Different mechanical implementations of a movement mechanism 11 for moving the battery 7 with respect to the main frame 2 may be considered. The movement mechanism may for example be based on a rotation mechanism for rotating the battery 7 with respect to the main frame 2 and/or a translation mechanism for translating the battery 7 or portions of the battery with respect to the main frame 2.

In embodiments, as illustrated on Fig.3a to Fig.3c, the movement mechanism comprises a battery rotation axis 9 for rotating the battery 7 with respect to the central plane CP of the main frame 2. By rotating the battery 7 to the left-hand side of the central plane up to a maximum angle αₘₐₓ, as shown on Fig.3b, the position of the centre of mass M_{B} of the battery is moving from the start position P0 on the central plane CP to the first end position P1 outside the central plane. Similarly, as shown on Fig.3c, by rotating the battery to the right-hand side by the maximum angle αₘₐₓ the position of the centre of mass of the battery M_{B} is moving from the start position P0 on the central plane CP to the second end position outside the central plane.

In the example shown on Fig.3a to Fig.3c, the battery rotation axis 9 is a low-positioned longitudinal axis. A low-positioned longitudinal axis has to be interpreted as an axis that is located closer to the road surface H than the centre of mass of the battery M_{B}. In other words, the battery rotation axis 9 is configured such that a distance of the battery rotation axis 9 to the road surface H the two-wheeled vehicle is riding on or resting on is smaller than a distance of the centre of mass of the battery M_{B} to the road surface, and this for any of the positions of the centre of mass of the battery between the start position P0 and the first end position P1 or between the start position P0 and the second end position P2.

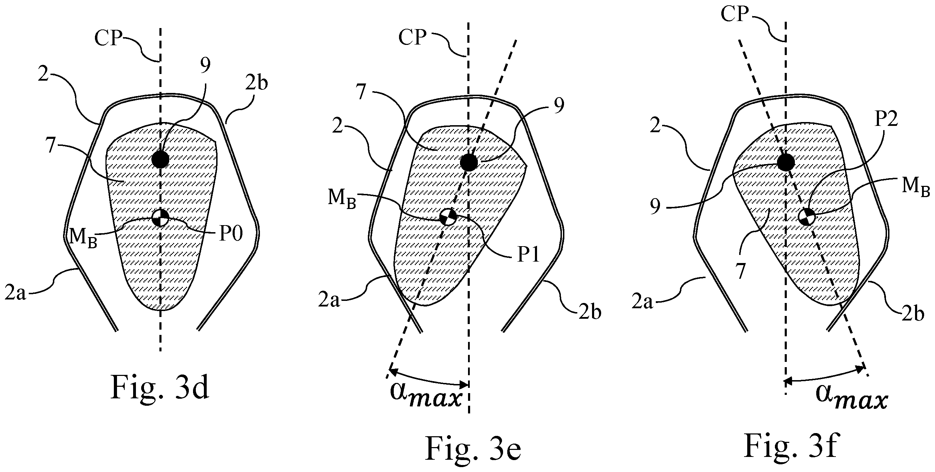

In other embodiments, as schematically illustrated on Fig.3d to Fig.3f, the battery rotation axis 9 may be a high-positioned longitudinal axis. A high-positioned longitudinal axis has to be interpreted as an axis that is located further away from the road surface than the centre of mass of the battery.

Similarly as with a low-positioned rotation axis; also with a high-positioned battery rotation axis, by rotating the battery 7 to the left-hand side of the central plane CP up to a maximum angle αₘₐₓ, as shown on Fig.3e, the position of the centre of mass M_{B} of the battery is moving from the start position P0 on the central plane CP to the first end position P1 outside the central plane. Similarly, as shown on Fig.3f, by rotating the battery to the right-hand side by the maximum angle αₘₐₓ the position of the centre of mass of the battery M_{B} is moving from the start position P0 on the central plane CP to the second end position P2 outside the central plane CP

For embodiments wherein the battery rotation axis 9 is a high-positioned longitudinal axis, the rotation axis is configured such that a distance of the battery rotation axis 9 to the road surface H the two-wheeled vehicle is riding on or resting on is larger than a distance of the centre of mass of the battery M_{B} to the road surface H, and this for any of the positions of the centre of mass of the battery between the start position P0 and the first end position P1 or between the start position P0 and the second end position P2.

Preferably the battery rotation axis 9 is located in the central plane CP, as schematically illustrated on Fig.3a to Fig.3c.

In embodiments, the battery rotation axis 9 is a longitudinal axis located in the central plane CP and the longitudinal axis may be parallel with an axis connecting a centre point of the front wheel with a centre point of the rear wheel, as schematically shown on Fig. 1. In other words, in these embodiments, when front and rear wheels have the same size, the battery rotation axis 9 is parallel with the road surface H the two-wheeled vehicle is resting or riding on.

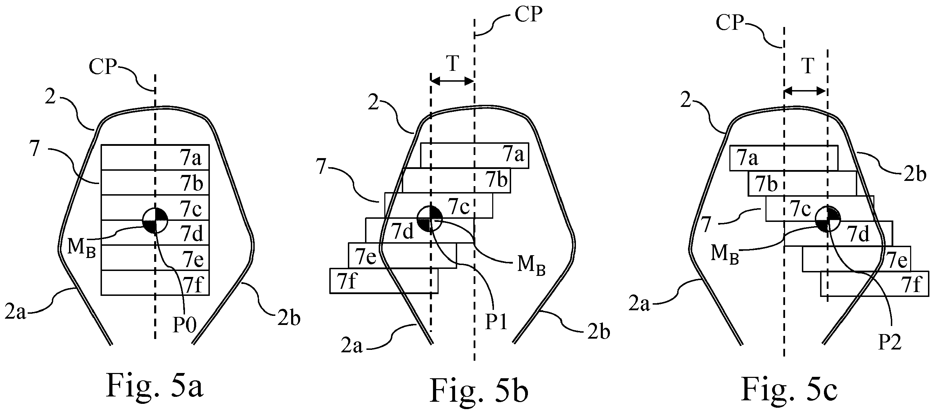

In embodiments, as schematically illustrated on Fig.5a to Fig.5c, the battery 7 comprises a plurality of battery modules, 7a to 7f and the movement mechanism comprises a translation mechanism configured for translating one or more of the battery modules in a direction transverse, preferably perpendicular, to the central plane, such that the position of the centre of mass of the battery M_{B} may be changed by translating the one or more battery modules with respect to the central plane.

In the example shown on Fig.5b and Fig.5c, the centre of mass M_{B} of the battery is translated by a distance T with respect to the central plane CP.

Thereto, in this example, battery module 7a is maintained in a fixed position and the steering aid system is configured for translating battery modules 7b to 7f, and wherein module 7f being located closest to the bottom is translated further away from the central plane CP when compared to the other modules located on top of module 7f.

In other embodiments, as schematically illustrated on Fig.5d and Fig.5e, the battery module 7f, that is located closest to the bottom, may be maintained in a fixed position and the steering aid system may be configured to translate modules 7a to 7e and wherein module 7a is translated further away from the central plane when compared to modules located closer to the bottom.

In further embodiments, the person skilled in the art may consider other variations of translation mechanisms for translating battery modules in order to translate the centre of mass of the battery M_{B} with respect to the central plane CP.

Due to the movement of the position of the centre of mass M_{B} of the battery 7 from the start position P0 to an end position P1, P2 outside the central plane, also the position of the total centre of mass M_{T} resulting from the weight of the two-wheeled vehicle including the battery and including the weight of the rider, or if applicable the combined weight of rider and one or more passengers,, is moved outside the central plane. As a consequence, the required tilting angle for taking a given turn at a given speed is reduced when compared to a two-wheeled vehicle wherein the total centre of mass M_{T} is not moved outside the central plane.

How much the tilting angle is reduced by the steering aid system 10 according to the present disclosure depends on the type of movement mechanism implemented for moving the battery and on some geometrical parameters characterizing the two-wheeled vehicle. For a given geometry of the two-wheeled vehicle and type of movement mechanism implemented, the reduction of the tilting angle for a given turn radius and speed, can be calculated based on a mathematical model.

A mathematical model for a steering aid system using a movement mechanism comprising a battery rotation axis 9 for rotating the battery 7, as illustrated in Fig.3a to Fig.3c, is further discussed.

To evaluate the effect of a rotating battery, the mathematical model may be based on a two-wheeled vehicle having zero thickness tires such that the total centre of mass M_{T} , i.e. the centre of mass resulting from the weight of the two-wheeled vehicle and including the weight of the rider and any passenger if applicable, can be considered located on the central plane CP of the main frame, which can also be interpreted as a centre plane of the entire two-wheeled vehicle, as schematically illustrated on Fig.2.

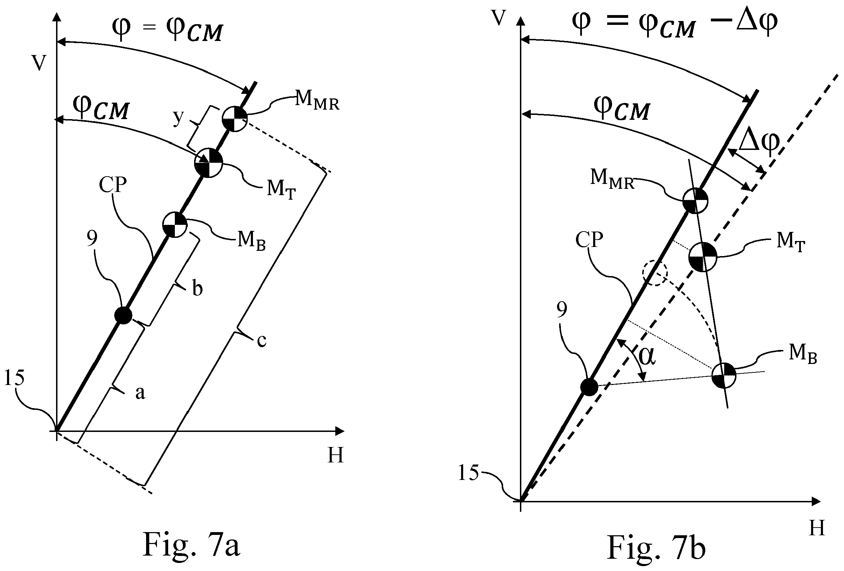

With reference to Fig.7a, a model representation of a two-wheeled vehicle is shown wherein the two-wheeled vehicle is tilted by an angle φ and wherein the steering aid system is not activated. In this mathematical model, the tilting angle φ is the angle between the central plane CP and a vertical plane V perpendicular to a road surface H. When the steering aid system is not activated, the positions of the centre of mass of the battery M_{B}, the centre of mass of the two-wheeled vehicle and rider but without the weight of the battery M_{MR}, and the position of the total centre of mass M_{T}, are all located on the central plane CP. As mentioned above, the total centre of mass M_{T} takes into account the weight of the two-wheeled vehicle including the weight of the battery and including the weight of the rider and the weight of any passenger if applicable.

On Fig.7a, two-wheeled vehicle specific parameters a, b, c are shown. The parameter a is the distance between the battery rotation axis 9 and the tilting axis 15 of the two-wheeled vehicle. The tilting axis 15, being the axis the two-wheeled vehicle is tilting around when making a left or right turn, corresponds to a contact line of the two-wheeled vehicle with the road surface H,. The parameter b is the distance between the battery rotation axis 9 and the centre of mass of the battery M_{B}. In this example, the battery rotation axis 9 is located between the centre of mass of the battery M_{B} and the tilting axis 15 located on the surface plane. The parameter c is the distance between the tilting axis 15 and the centre of mass M_{MR} related to the weight of the two-wheeled vehicle without the battery but with the weight of the rider. On Fig.7a, the distance between M_{MR} and M_{T} is identified with the variable y and one can derive from the drawing that y = Mᵣ x (c-b-a) wherein Mᵣ is the mass ratio between the weight of the battery and the total weight of the two-wheeled vehicle including the weight of the rider, and passenger if applicable.

With reference to Fig.7b, a model representation is shown is shown wherein the steering aid system is activated and wherein the battery, and hence the centre of mass of the battery M_{B}, is rotated around the battery rotation axis 9 by a rotation angle α.

As the displacement of the battery is small compared to a turning radius of a turn taken by a two-wheeled vehicle, one can approximate that the centrifugal force remains the same independently of the position of the battery. Hence, the centrifugal and gravity forces can be considered to apply on the total centre of mass M_{T}. Further, the total centre of mass M_{T} is always on a line that connects M_{B} with M_{MR} as illustrated on Fig.7b.

As illustrated on Fig.7b, as a consequence of the movement of the centre of mass of the battery M_{B}, also the centre of mass M_{T} of the total mass is moved outside the central plane CP. As illustrated on Fig.7b, The position of the total centre of mass M_{T} has been rotated by an angle Δφ when moving the centre of mass of the battery from the start to the end position. This rotation Δφ of the total centre of mass M_{T} is a rotation around the tilting axis 15 of the two-wheeled vehicle, as illustrated on Fig.7b. The tilting axis 15 corresponds to a line connecting the contact points of the wheels of the two-wheeled vehicle when positioned on the road surface H and when the wheels are aligned parallel with central plane. The tilting axis can also be interpreted as the intersection of the central plane CP with the road surface H. Generally, when moving the centre of mass of the battery M_{B} from the start position to one of the end positions, the total centre of mass M_{T} rotates in plane perpendicular to the central plane CP.

As the centrifugal and gravitational forces acting on the total center of mass M_{T} are the same independently of the position of the battery, the rotation angle Δφ of the total centre of mass M_{T} corresponds to a reduction angle Δφ of the tilting angle φ of the two-wheeled vehicle. In other words, when using the steering aid system, the tilting angle required to make a turn at a given speed and turn radius, is reduced when compared to the tilting angle required for taking the same turn at the same speed but without the steering aid system activated. Indeed as shown on Fig.7b: φ = *φ_{CM}* - Δφ, with *φ_{CM}* being the tilting angle of the total centre of mass M_{T}, which for taking the same turn at the same speed is the same angle with or without the steering aid system activated.

Based on trigonometry, as illustrated on Fig.7b, the reduction angle Δφ can be calculated by a formula comprising the parameters a, b and c: Δφ = tan⁻¹ [Mᵣ × b × sin(α)/(c - Mᵣ ×(c-a-b × cos(α)], with tan⁻¹ being the inverse tangent. Hence, with the model calculation the reduction of the tilting angle can be predicted.

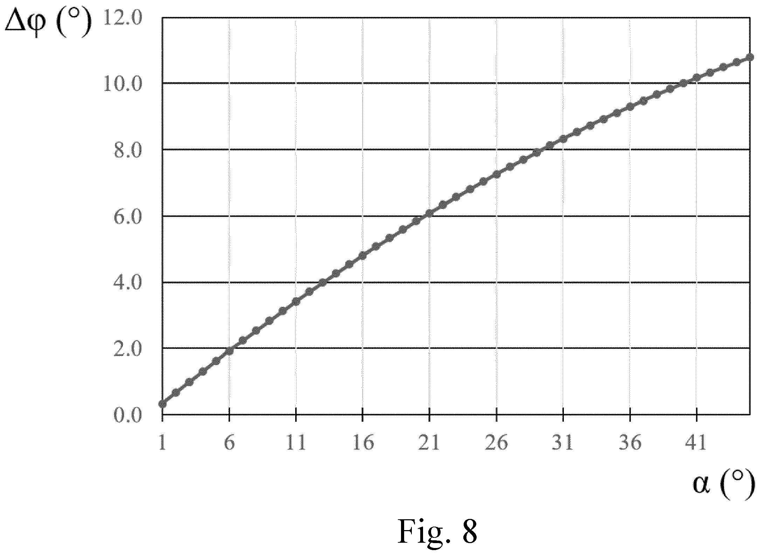

With reference to Fig.8, a graph is shown resulting from the model calculation discussed above and wherein the reduction of the tilting angle Δφ is plotted as function of the rotation angle α of the battery. This calculation was made for a rider weight of 80 kg, a battery weight of 70 kg and a two-wheeled vehicle weight without battery of 60 kg. The parameters a, b and c were set to respectively 20 cm, 40 cm, and 1 m. As shown in this example, if the rotation angle α of the battery is 30°, then the reduction angle Δφ is equal to 8,1°. This reduction angle has to be compared with the tilting angle φ required if no steering aid system is available. For example, if the speed of the two-wheeled vehicle is 90 km/h and the curvature, i.e. the radius of the turn is 100 m then the tilting angle φ for taking the turn equals 32,5°. If the steering aid system is activated and the battery can be rotated up to 30°, the tilting angle equals 32,5° - 8,1° = 24,4°, which is a significant difference compared to the 32,5° when no steering aid system is activated.

Hence, by optimizing the parameters a, b and c of the two-wheeled vehicle, a steering aid system can be realized that can provide for a major reduction in tilting angle when taking a left or a right turn.

The mathematical model that has been described above is for a rotation based movement mechanism of the battery. However, it follows that a person skilled in the art can also develop a mathematical model for a translation based movement mechanism as illustrated in Fig.5a to Fig.5c or Fig.5d and Fig.5e. Also, with a translation based movement system, the movement of the centre of mass of the battery M_{B} results in a rotation of the centre of mass M_{T} of the total mass around the tilting axis 15 of the two-wheeled vehicle.

As mentioned above, the reduction of the tilting angle Δφ obtained with the steering aid system according to the present disclosure depends on the weight of the rider. For rider having a higher weight, e.g. having a weight above 100 kg, the reduction of the tilting angle will be smaller when compared to rider having a lower weight. The two-wheeled vehicle, including for example the parameters a, b and c, if a rotatable battery is used, may be optimized to have at least some minimum reduction of the tilting angle for a given rider reference weight.

Generally, the steering aid system 10 is configured for reducing the tilting angle of the two-wheeled vehicle when taking a left or a right turn by at least 4°, preferably by at least 6°, more preferably by at least 8°, (Wasn't the VUB model showing up to 14° benefit? Obviously, it depends on many parameters... and wherein the reduction Δφ corresponds to a difference in the tilting angle φ observed when taking the same left or right turn at the same speed with the steering aid system activated and deactivated for a rider having a weight equal or lower than 100 kg, or for a rider and passenger having a combined weight equal or lower than 100 kg. For this comparison, it is hereby assumed that the rider, and passengers if applicable, sits symmetrically on the two-wheeled vehicle and hence does not lean to the left or to the right when taking a turn.

For any two-wheeled vehicle, the obtainable reduction of the tiling angle Δφ as specified above may be verified by a model calculation or by a measurement.

In embodiments, depending on the detailed implementation of the movement mechanism applied and depending on the riders weight, even large reductions of the tilting angle may be obtained, such as for example reductions of more than 10° and even reductions of 15° and more.

As the reduction of the tilting angle Δφ depends, as discussed above on the weight of the rider and passengers, an alternative way of characterizing the performance of the steering aid system independently of the rider and passenger weight is to specify a reduction of the tilting angle Δφ for a zero weight rider and passenger. When the weight of the rider and passenger is zero, the reduction of the tilting angle Δφ will have a maximum value Δφₘₐₓ and this maximum angle characterizes the steering aid system without considering the weight of the rider and passengers. This obtainable maximum reduction of the tilting angle Δφₘₐₓ, may be verified by a model calculation or by a measurement.

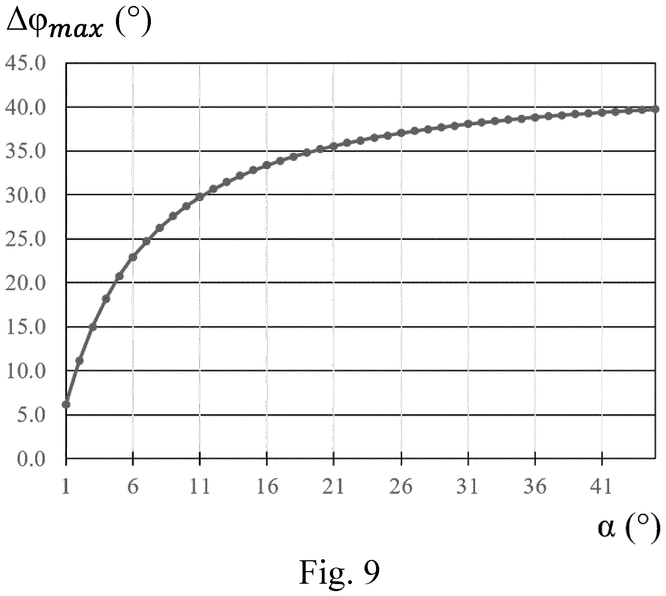

Results of a model calculation are shown on Fig.9 wherein the weight of the rider is set to zero and wherein all the other model parameters are the same as those used for the calculations shown on Fig.8. For example for a battery rotation angle α of 30°, the value of Δφₘₐₓ is equal to 37,9°.

As discussed above, and shown on Fig.7b, the reduction angle Δφ corresponds to a rotation angle of the total centre of mass M_{T} with respect to the tilting axis 15 of the two-wheeled vehicle. For a zero rider weight and zero passengers weight, the total centre of mass M_{T} can be considered as the centre of mass of the two-wheeled vehicle M_{MC}, i.e. taking into account the weight of the two-wheeled vehicle including the battery but without a weight for the rider and passengers. When moving the centre of mass of the battery M_{B} from the start position P0 to the first end position P 1, the centre of mass of the two-wheeled vehicle M_{MC} is rotated towards the left-hand side of the central plane by the maximum angle Δφₘₐₓ and when moving the centre of mass of the battery M_{B} from the start position P0 to the second end position P2, the centre of mass of the two-wheeled vehicle M_{MC} is rotated towards the right-hand side of the central plane by the maximum angle Δφₘₐₓ.

Generally, the steering aid system 10 is configured such that without rider and without passenger seated on the two-wheeled vehicle, the centre of mass M_{MC} of the two-wheeled vehicle, which includes the mass of the battery 7, is rotated around the tilting axis 15 of the two-wheeled vehicle by an angle Δφₘₐₓ of at least 10°, preferably at least 15°, more preferably by at least 20°, when moving the centre of mass of the battery from the start position to one of the end positions. In embodiments, Δφₘₐₓ is at least 25°.

The steering aid system 10 may either be a manually controlled system, i.e. a system fully controlled by the rider of the two-wheeled vehicle, or an automatically controlled system that does not need an intervention of the rider.

In embodiments, the steering aid system 10 may switchably be selected to either operate in a manually controlled mode controlled by the rider or to operate in the automatically controlled mode. Both the manual and the automated mode will be further discussed.

In embodiments wherein the steering aid system is a manual system controlled by the rider, the direction signaling device 12 comprises at least a first and a second button configured for manually triggering the first, second, third and fourth signal. Preferably the first and second buttons are hand-controlled or feet-controlled buttons.

In embodiments, the two-wheeled vehicle comprises a handle bar 8 wherein the first button is located on a left side of the handle bar and the second button is located on a right side of the handle bar. In other embodiments, the first button corresponds to a left push pedal and the second button corresponds to a right push pedal. Preferably the push pedals are controllable with the heel of the foot.

In embodiments, the first and second button are configured for generating the first signal by pressing the first button and maintaining the first button pressed until the apex of the turn is reached, generating the second signal by releasing the first button, generating the third signal by pressing the second button and maintaining the second button pressed until the apex of the turn is reached, and generating the fourth signal by releasing the second button. Hence in this embodiment, if taking a left or right turn, respectively the first and second button have to be kept pressed during the period between starting entering the turn and starting coming-out of the turn.

In other embodiments, the generation of the first to fourth signal may be different. For example, in other embodiments the first and second button are configured for generating the first signal by pressing the first button, generating the second signal by releasing the first button and at the same time pressing the second button, generating the third signal by pressing the second button, and generating the fourth signal by releasing the second button and at the same time pressing the first button.

In other embodiments, the generation of the first to fourth signal may be different. For example, in other embodiments the first button is configured for generating the first signal until the battery packed is fully tilted. Pressing the second button generates the second signal. Similarly, generating the third signal is done by pressing the second button, and generating the fourth signal by pressing the first button. In this way, the rider does not have to maintain any of the buttons pressed during the motion of the battery.

Preferably the controller is configured for stopping the moving of the centre of mass of the battery from the start position towards the first end position if the first button is released and for stopping the moving of the centre of mass of the battery from the start position towards the second end position if the second button is released.

In further embodiments wherein the steering aid system is a manual system controlled by the rider of the two-wheeled vehicle, the direction signaling device 12 may be a voice-controlled direction signaling device. In these embodiments, the direction signaling device 12 may be equipped with a microphone attachable to for instance the helmet of the rider. In this way, the rider of the two-wheeled vehicle can express pre-defined keywords in the microphone. For example, at least four pre-defined keywords can be defined for triggering the generation of respectively the first, second, third and fourth signal. In these embodiments, the voice-controlled direction signaling device is configured for generating the first, second, third or fourth signal when a corresponding key-word is received through the microphone.

As discussed above, in embodiments, the steering aid system may be an automated system. In these embodiments, the direction signaling device 12 may comprise a road detection device configured for monitoring a road followed by the rider, and a data processing apparatus configured for receiving data from the road detection device and for identifying an upcoming left turn or an upcoming right turn.

Preferably, the data processing apparatus is further configured for identifying an associated curvature of the upcoming left turn and for identifying an associated curvature of the upcoming right turn. The curvatures allow for instance to determine at what in the turn the two-wheeled vehicle has to come-out of the turn.

Preferably the road detection device comprises any of a camera, a radar, a lidar, a gps navigation system, or a combination thereof. Such equipment allows to detect the layout or flow of the road ahead.

In embodiments, the data processing apparatus may be configured for generating the first signal when the left turn identified reaches a point on the road for starting entering the identified left turn, generating the second signal when reaching a point on the road for starting coming out of the left turn identified, usually considered to be the apex of the turn, generating the third signal when the right turn identified reaches a point on the road for starting entering the identified right turn, and generating the fourth signal if reaching a point on the road for starting coming out of the right turn identified.

In embodiments, the data processing apparatus may be configured to apply an AI algorithm for generating the first, second, third and fourth signals. The AI algorithm may be trained to identify at what point on the road to start the turn and moving the centre of mass of the battery from the start position to the end position and to identify at what point in the turn to start coming-out of the turn and moving back the centre of mass of the battery towards the start position. The training data may be based on a set of experimental data wherein a two-wheeled vehicle has taken turns at various speeds for turns having various curvatures, and wherein the moment of entering the turn and coming-out of the turn is established. In other words, for an upcoming turn identified by the road detection device, the data processing apparatus will determine at what point to start entering the turn and at what point the apex of the turn is reached.

As discussed above, the tilting angle is an angle measured between the central plane CP and a vertical plane V perpendicular to a road surface H the two-wheeled vehicle is driving on such that when the tilting angle is zero the central plane CP is parallel with the vertical plane V. When the tilting angle is zero, the two-wheeled vehicle is in upright position as illustrated on Fig.4a. When turns are taken at a lower speed or when the curvature of the turn is small, the required tilting angle for making the turn might be small. In these circumstances the rider of the two-wheeled vehicle may decide not to use the steering aid system as the applied inclination reduction might be too large in view of a small tilting angle required.

In embodiments, the steering aid system might be adapted such that it can also be used when taking turns requiring small tilting angles. Hence, for these circumstances it is important the steering aid system does not overcompensate such that when taking a turn, the total centre of mass M_{T} would not have been moved too far outside the central plane such that the rider would not have to counter balance the two-wheeled vehicle.

Thereto, in embodiments, the two-wheeled vehicle comprises one or more inclination sensors for measuring the tilting angle φ of the two-wheeled vehicle while taking a left or a right turn.

In embodiments comprising one or more inclination sensors, the controller 13 is configured for controlling the movement of the position of the centre of mass of the battery M_{B} between the start position P0 and the first end position P1 and between the start position P0 and the second end position P2 such that during taking of a left turn the central plane CP is either parallel with or tilted to the left-hand side of the vertical plane V and during taking of a right turn the central plane CP is either parallel or tilted to the right-hand side of the vertical plane V. In this way, when taking a left or a right turn at a given speed, the reduction of the tilting angle applied is not larger than the tilting angle that would be required without activating the steering aid system.

Different options are possible to establish a control-loop for the controller such that the reduction of the tiling angle applied is not larger than the tilting angle required when no steering aid system is activated. In embodiments, for example, when taking a left turn and the first signal is generated, and hence the centre of mass of battery starts to move away from the central plane, the controller may monitor the inclination angle, which may for example start from a zero degree tilting angle just before entering the turn and increase when entering the turn. If the controller further observes that the inclination starts reducing again before receiving the second signal, and becomes smaller than a minimum angle, the controller may start moving the centre of mass of the battery closer to the central plane. And if the inclination angle would increase again, the controller may move the centre of mass of the battery further away from the central plane.

In embodiments, the two-wheeled vehicle comprises a weight sensor for measuring a weight of the rider or a combined weight of a rider and one or more passengers or a user interface for entering a weight of the rider or a combined weight of a rider and one or more passengers.

In embodiments, the rider weight or, if applicable the combined weight of the rider and one or more passengers, may be used to limit the motion of the battery. In embodiments, the controller 13 is configured for determining based on the measured weight, or the weight entered through the user interface, a first rider specific position for the centre of mass of the battery between the start position P0 and the first end position P1 and a second rider specific position between the start position P0 and the second end position P2. In these embodiments, the moving of the centre of mass of the battery from the start position P0 towards the first end position P1, in response to the first signal S 1, is stopped when the first rider specific position is reached. Similarly, wherein the moving of the centre of mass of the battery M_{B} from the start position P0 towards the second end position P2, in response to the third signal S3, is stopped when the second rider specific position is reached. This limitation of not moving the centre of mass of the battery to the end positions, might be advantageous especially for rider having a low weight in order to limit the reduction of the inclination.

In further embodiments, the controller 13 is configured for predicting a reduction of the tilting angle. The predicting of the reduction of the tilting angle may be based on a mathematical expression or a tabular expression defining the reduction of the tilting angle as function of the position of the centre of mass of the battery and/or as function of the weight of the rider. In this way, by taking into account the predictions of the reduction of the tilting angle, the controller can, especially in combination with inclination sensors for measuring the tilting angle φ of the two-wheeled vehicle while taking a left or a right turn, more accurately control the motion of the centre of mass of the battery.

### CLAUSES

Here below, text is provided in the form of clauses. The clauses comprise characterizations indicating a variety of options, features, and feature combinations that can be used in accord with the teachings of the present disclosure. Alternate characterizations of the ones given, but consistent with the descriptions here above, are possible. In summary, according to the present disclosure, the following clauses could for instance be claimed:
1. An electric two-wheeled vehicle (1) comprising at least a main frame (2), a front wheel (3) coupled to a front side of the main frame, a rear wheel (4) coupled to a rear side of the main frame, an electric motor for driving the rear wheel and/or front wheel, and a battery (7) supported by the main frame and configured for powering said electric motor, and wherein a central plane (CP) associated to the main frame (2) is dividing the main frame into a left half (2a) and a right half (2b), characterized in that the battery (7) or at least a portion of the battery is moveable with respect to the main frame (2), and in that the two-wheeled vehicle comprises a steering aid system (10) for reducing a tilting angle (φ) of the two-wheeled vehicle when taking a left or a right turn, said steering aid system (10) comprising:
   - a movement mechanism (11) configured for moving a position of a centre of mass (M_{B}) of the battery with respect to the central plane (CP) between a start position (P0) located on the central plane and a first end position (P1) located outside of the central plane on a left-hand side of the central plane, and for moving the position of the centre of mass (M_{B}) between said start position (P0) and a second end position (P2) located outside the center plane on a right-hand side of the central plane,
   - a direction signaling device (12) configured for generating at least a first signal (S1) signaling entering a left turn, a second signal (S2) signaling coming-out of the left-turn, a third signal (S3) signaling entering a right turn and a fourth signal (S4) signaling coming-out of the right turn, and
   - a controller (13) configured for: a) moving the centre of mass (M_{B}) from the start position (P0) towards the first end position (P1) if said first signal (S1) is generated, and if said second signal (S2) is subsequently generated moving the centre of mass (M_{B}) back to the start position (P0), and b) moving the centre of mass (M_{B}) from the start position (P0) towards the second end position (P2) if said third signal (S3) is generated, and if said fourth signal (S4) is subsequently generated moving the centre of mass (M_{B}) back to the start position (P0).
2. The two-wheeled vehicle according to clause 1 comprising a speed sensor for monitoring a speed of the two-wheeled vehicle, and wherein the controller (13) is configured for starting said centre of mass (M_{B}) to move from the start position (P0) to the first (P1) or second (P2) end position only on condition that the speed is above a first speed reference value and/or wherein the controller is configured for moving said centre of mass (M_{B}) back to the start position (P0) if the speed is dropping below a second speed reference value, preferably the second reference value is equal to or lower than the first speed reference value.
3. The two-wheeled vehicle according to any of previous clauses wherein said movement mechanism comprises any of: a driving motor, a pneumatic device, a hydraulic device or a combination thereof, for driving the movement of the battery (7) or the portion of the battery relative to the main frame.
4. The two-wheeled vehicle according to any of previous clauses wherein said movement mechanism (11) comprises a battery rotation axis (9) for rotating said battery (7) with respect to said central plane (CP) to the left-hand side and to the right-hand side of the central plane up to a maximum angle (αₘₐₓ) such that by rotating the battery to the left-hand side by said maximum angle (αₘₐₓ) the position of the centre of mass (M_{B}) of the battery is moving from the start position (P0) on the central plane to the first end position (P1) outside the central plane and by rotating the battery to the right-hand side by said maximum angle (αₘₐₓ) the position of the centre of mass (M_{B}) of the battery is moving from the start position (P0) on the central plane to the second end position (P2) outside the central plane, preferably said battery rotation axis (9) is located in the central plane.
5. The two-wheeled vehicle according to any of clauses 1 to 3 wherein said battery (7) comprises a plurality of battery modules (7a, 7b, 7c, 7d, 7e, 7f) and said movement mechanism (11) comprises a translation mechanism configured for translating one or more of said battery modules in a direction transverse, preferably perpendicular, to said central plane (CP), such that the position of the centre of mass (M_{B}) of the battery is variable by translating said one or more battery modules with respect to said central plane.
6. The two-wheeled vehicle according to any of previous clauses wherein said controller (13) is configured for continuing the movement of said centre of mass (M_{B}) from the start position (P0) towards the first end position (P1) until the first end position (P1) is reached unless said second signal (S2) is generated before reaching the first end position, and continuing the movement of said centre of mass (M_{B}) from the start position towards the second end position (P2) until the second end position is reached unless said fourth signal (S4) is generated before reaching said second end position, preferably when the second or fourth signal is generated before reaching respectively the first and second end position, the centre of mass of the battery (M_{B}) is moved back to the start position (P0).
7. The two-wheeled vehicle according to any of previous clauses wherein said direction signaling device (12) comprises at least a first and a second button configured for manually triggering said first, second, third and fourth signal, preferably said first and second buttons are hand-controlled or feet-controlled buttons.
8. The two-wheeled vehicle according to clause 7 wherein said first and second button are configured for generating said first signal (S 1) by pressing the first button, generating said second signal (S2) by releasing the first button, generating said third signal (S3) by pressing the second button, and generating said fourth signal (S4) by releasing the second button.
9. The two-wheeled vehicle according to clause 7 wherein said first and second button are configured for generating said first signal (S 1) by pressing the first button, generating said second signal (S2) by releasing the first button and pressing the second button, generating said third signal (S3) by pressing the second button, and generating said fourth signal (S4) by releasing the second button and pressing the first button, preferably the controller is configured for stopping the moving of the centre of mass (M_{B}) from the start position towards the first end position if said first button is released and stopping the moving of the centre of mass (M_{B}) from the start position towards the second end position if said second button is released.
10. The two-wheeled vehicle according to any of clauses 7 to 9 comprising a handle bar (8) and wherein said first button is located on a left side of the handle bar and the second button is located on a right side of the handle bar or alternatively wherein the first button corresponds to a left push pedal and the second button corresponds to a right push pedal, preferably wherein the push pedals are controllable with a heel of the foot.
11. The two-wheeled vehicle according to any of clauses 1 to 6 wherein the direction signaling device 12 is a voice-controlled direction signaling device comprising a microphone for receiving at least four pre-defined keywords expressed by a rider of the two-wheeled vehicle for triggering the generation of respectively the first, second, third and fourth signal, preferably the microphone is attachable to a helmet of the rider, and wherein the voice-controlled direction signaling device is configured for generating the first, second, third or fourth signal when a corresponding key-word is received through the microphone.
12. The two-wheeled vehicle according to any of clauses 1 to 6 wherein said direction signaling device (12) comprises a road detection device configured for monitoring a road followed by the two-wheeled vehicle, and a data processing apparatus configured for receiving data from the road detection device and for identifying an upcoming left turn and an upcoming right turn, preferably the road detection device comprises any of a camera, a radar, a lidar, a gps navigation system, or a combination thereof.
13. The two-wheeled vehicle according to clause 12 wherein the data processing apparatus is further configured for identifying an associated curvature of the upcoming left turn and identifying an associated curvature of the upcoming right turn.
14. The two-wheeled vehicle according to clause 12 or clause 13 wherein said data processing apparatus is configured for generating said first signal when the left turn identified reaches a point on the road for starting entering the identified left turn, generating said second signal when reaching a point on the road for starting coming-out of the left turn identified, generating said third signal when the right turn identified reaches a point on the road for starting entering the identified right turn, and generating said fourth signal if reaching a point on the road for starting coming-out of the right turn identified, preferably said data processing apparatus is configured to apply a AI algorithm for generating said first, second, third and fourth signals.
15. The two-wheeled vehicle according to any of previous clauses wherein the main frame (2) is a tubular frame or a monocoque frame, preferably wherein the main frame (2) is symmetric with respect to the central plane (CP).
16. The two-wheeled vehicle according to any of previous clauses wherein the steering aid system (10) is configured for reducing the tilting angle (φ) of the two-wheeled vehicle when taking a left or a right turn by at least 4°, preferably by at least 6°, more preferably by at least 8°, and wherein said reduction of the tilting angle is defined as a difference in tilting angle observed when taking the same left or right turn at the same speed with the steering aid system activated and deactivated for a rider having a weight equal or lower than 100 kg or for a rider and passenger having a combined weight equal or lower than 100 kg.
17. The two-wheeled vehicle according to any of previous clauses wherein the steering aid system (10) is configured such that when no rider and no passenger is seated on the two-wheeled vehicle and when moving the centre of mass of the battery (M_{B}) from the start position (P0) to the first end position (P1) the centre of mass of the two-wheeled vehicle (M_{MC}) is rotated towards the left-hand side of the central plane (CP) by a maximum angle (Δφmax), and when moving the centre of mass of the battery (M_{B}) from the start position (P0) to the second end position (P2) the centre of mass of the two-wheeled vehicle (M_{MC}) is rotated towards the right-hand side of the central plane (CP) by the maximum angle (Δφmax), and wherein said rotation of the centre of mass of the two-wheeled vehicle (M_{MC}) is around a tilting axis (15) of the two-wheeled vehicle, wherein the tilting axis (15) is defined as an intersection between the central plane (CP) and a road surface (H) the front and rear wheel are resting on, and wherein said maximum angle (Δφmax) is at least least 10°, preferably at least 15°, more preferably at least 20°.
18. The two-wheeled vehicle according to any of previous clauses comprising a weight sensor for measuring a weight of a rider or a combined weight of a rider and one or more passengers of the two-wheeled vehicle or a user interface for entering a weight of the rider or a combined weight of the rider and the one or more passengers of the two-wheeled vehicle.
19. The two-wheeled vehicle according to clause 18 wherein the controller (13) is configured for determining based on said weight a first rider specific position for the centre of mass (M_{B}) of the battery between the start position (P0) and the first end position (P 1) and a second rider specific position between the start position (P0) and the second end position (P2), and wherein said moving of the centre of mass from the start position towards the first end position is stopped when the first rider specific position is reached, and wherein said moving of the centre of mass from the start position (P0) towards the second end position (P2) is stopped when the second rider specific position is reached.
20. The two-wheeled vehicle according to any of previous clauses comprising one or more inclination sensors for measuring the tilting angle (φ) of the two-wheeled vehicle while taking a left or a right turn, wherein the tilting angle is an angle measured between the central plane (CP) and a vertical plane (V) perpendicular to a road surface (H) the two-wheeled vehicle is riding on such that when the tilting angle is zero the central plane (CP) is parallel with the vertical plane (V), and wherein the controller (13) is configured for controlling the movement of the position of the centre of mass (M_{B}) of the battery between the start position (P0) and the first end position (P 1) and between the start position (P0) and the second end position (P2) such that during taking of a left turn the central plane (CP) is either parallel with the vertical plane (V) or the central plane is tilted to the left-hand side of the vertical plane (V) and during taking of a right turn the central plane (CP) is either parallel with the vertical plane (V) or the central plane is tilted to the right-hand side of the vertical plane (V).
21. The two-wheeled vehicle according to any of previous clauses wherein said controller (13) is configured for predicting a reduction of the tilting angle, preferably said predicting of the reduction of the tilting angle is based on a mathematical expression or a tabular expression defining the reduction of the tilting angle as function of the position of the centre of mass of the battery and/or as function of the weight of the rider or the combined weight of the rider and one or more passengers, preferably wherein said controller is configured for controlling the movement of the centre of mass of the battery by taking into account said prediction of the reduction of the tilting angle.
22. The two-wheeled vehicle according to any of previous clauses wherein the tilting angle is defined as an angle measured between the central plane of the motorcycle and a vertical plane (V) perpendicular to a road surface (H) the motorcycle is riding on or resting on such that when the tilting angle is zero the central plane is parallel with the vertical plane.
23. The two-wheeled vehicle according to any of previous clauses wherein the reduction of the tilting angle of the two-wheeled vehicle when taking a left or a right turn corresponds to a difference in tilting angle when taking the same left or right turn at a same speed with the steering aid system deactivated and the steering aid system activated.
24. The two-wheeled vehicle according to any of previous clauses wherein said coming-out of the left-turn and said coming out of the right turn corresponds to a point in time when the two-wheeled vehicle has reached an apex of respectively the left and right turn.
25. The two-wheeled vehicle according to any of previous clauses wherein coming-out of the left and coming-out of the right turn corresponds to a point in time when the rider of the two-wheeled vehicle starts reducing the inclination of the two-wheeled vehicle for exiting respectively the left turn and the right turn.
26. The two-wheeled vehicle according to any of previous clauses wherein said entering a left turn and entering a right turn corresponds to a point in time when the two-wheeled vehicle makes a transition from driving along a straight line portion to entering a curved line portion of respectively the left and right turn.
27. The two-wheeled vehicle according to any of previous clauses wherein said entering a left turn and entering a right turn corresponds to the moment in time the rider of the two-wheeled vehicle starts inclining the two-wheeled vehicle for taking respectively the left turn and the right turn.
28. The two-wheeled vehicle according to any of previous clauses, when referring to clause 4, wherein said battery rotation axis (9) is parallel with a line connecting a centre of the front wheel with a centre of the rear wheel.
29. The two-wheeled vehicle according to any of previous clauses, when referring to clause 4, wherein the battery rotation axis (9) is a low-positioned longitudinal axis configured such that a distance of the battery rotation axis (9) to the road surface (H) the two-wheeled vehicle is riding on or resting on is smaller than a distance of the centre of mass of the battery (M_{B}) to the road surface, for any of the positions of the centre of mass of the battery between the start position (P0) and the first end position (P 1) or between the start position (P0) and the second end position (P2).
30. The two-wheeled vehicle according to any of clauses 4 to 28, when referring to clause 4, wherein the battery rotation axis (9) is a high-positioned longitudinal axis configured such that a distance of the battery rotation axis (9) to the road surface (H) the two-wheeled vehicle is riding on or resting on is larger than a distance of the centre of mass of the battery (M_{B}) to the road surface (H), for any of the positions of the centre of mass of the battery between the start position (P0) and the first end position (P1) or between the start position (P0) and the second end position (P2).
31. The two-wheeled vehicle according to any of previous clauses wherein left and right are specified from a perspective of a rider when seated on the seat of the two-wheeled vehicle facing forward for steering the two-wheeled vehicle.
32. The two-wheeled vehicle according to any of previous clauses wherein the two-wheeled vehicle is a motorcycle or a scooter.

The present disclosure has been described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

### REFERENCE NUMBERS

| | |
|---|---|
| 1 | Electric two-wheeled vehicle |
| 2 | Main frame |
| 3 | Front wheel |
| 4 | Rear wheel |
| 5 | Fork |
| 6 | Seat |
| 7 | Battery |
| 8 | Handlebar |
| 9 | Battery rotation axis |
| 10 | Steering aid system |
| 11 | Movement mechanism |
| 12 | Direction signaling device |
| 13 | Controller |
| 15 | Tilting axis |
| CP | Central plane |
| S1 | First signal |
| S2 | Second signal |
| S3 | Third signal |
| S4 | Fourth signal |
| V | Vertical plane |
| H | Road surface |

## Claims

1. An electric two-wheeled vehicle (1) comprising at least a main frame (2), a front wheel (3) coupled to a front side of the main frame, a rear wheel (4) coupled to a rear side of the main frame, an electric motor for driving the rear wheel and/or front wheel, and a battery (7) supported by the main frame and configured for powering said electric motor, and wherein a central plane (CP) associated to the main frame (2) is dividing the main frame into a left half (2a) and a right half (2b), **characterized in that** the battery (7) or at least a portion of the battery is moveable with respect to the main frame (2), **and in that** the two-wheeled vehicle comprises a steering aid system (10) for reducing a tilting angle (φ) of the two-wheeled vehicle when taking a left or a right turn, said steering aid system (10) comprising:
• a movement mechanism (11) configured for moving a position of a centre of mass (M_{B}) of the battery with respect to the central plane (CP) between a start position (P0) located on the central plane and a first end position (P1) located outside of the central plane on a left-hand side of the central plane, and for moving the position of the centre of mass (M_{B}) between said start position (P0) and a second end position (P2) located outside the center plane on a right-hand side of the central plane,
• a direction signaling device (12) configured for generating at least a first signal (S1) signaling entering a left turn, a second signal (S2) signaling coming-out of the left-turn, a third signal (S3) signaling entering a right turn and a fourth signal (S4) signaling coming-out of the right turn, and
• a controller (13) configured for: a) moving the centre of mass (M_{B}) from the start position (P0) towards the first end position (P1) if said first signal (S1) is generated, and if said second signal (S2) is subsequently generated moving the centre of mass (M_{B}) back to the start position (P0), and b) moving the centre of mass (M_{B}) from the start position (P0) towards the second end position (P2) if said third signal (S3) is generated, and if said fourth signal (S4) is subsequently generated moving the centre of mass (M_{B}) back to the start position (P0).

2. The two-wheeled vehicle according to claim 1 comprising a speed sensor for monitoring a speed of the two-wheeled vehicle, and wherein the controller (13) is configured for starting said centre of mass (M_{B}) to move from the start position (P0) to the first (P1) or second (P2) end position only on condition that the speed is above a first speed reference value and/or wherein the controller is configured for moving said centre of mass (M_{B}) back to the start position (P0) if the speed is dropping below a second speed reference value, preferably the second reference value is equal to or lower than the first speed reference value.

3. The two-wheeled vehicle according to any of previous claims wherein said movement mechanism comprises any of: a driving motor, a pneumatic device, a hydraulic device or a combination thereof, for driving the movement of the battery (7) or the portion of the battery relative to the main frame.

4. The two-wheeled vehicle according to any of previous claims wherein said movement mechanism (11) comprises a battery rotation axis (9) for rotating said battery (7) with respect to said central plane (CP) to the left-hand side and to the right-hand side of the central plane up to a maximum angle (αₘₐₓ) such that by rotating the battery to the left-hand side by said maximum angle (αₘₐₓ) the position of the centre of mass (M_{B}) of the battery is moving from the start position (P0) on the central plane to the first end position (P1) outside the central plane and by rotating the battery to the right-hand side by said maximum angle (αₘₐₓ) the position of the centre of mass (M_{B}) of the battery is moving from the start position (P0) on the central plane to the second end position (P2) outside the central plane, preferably said battery rotation axis (9) is located in the central plane.

5. The two-wheeled vehicle according to any of claims 1 to 3 wherein said battery (7) comprises a plurality of battery modules (7a,7b,7c,7d,7e,7f) and said movement mechanism (11) comprises a translation mechanism configured for translating one or more of said battery modules in a direction transverse, preferably perpendicular, to said central plane (CP), such that the position of the centre of mass (M_{B}) of the battery is variable by translating said one or more battery modules with respect to said central plane.

6. The two-wheeled vehicle according to any of previous claims wherein said controller (13) is configured for continuing the movement of said centre of mass (M_{B}) from the start position (P0) towards the first end position (P 1) until the first end position (P1) is reached unless said second signal (S2) is generated before reaching the first end position, and continuing the movement of said centre of mass (M_{B}) from the start position towards the second end position (P2) until the second end position is reached unless said fourth signal (S4) is generated before reaching said second end position, preferably when the second or fourth signal is generated before reaching respectively the first and second end position, the centre of mass of the battery (M_{B}) is moved back to the start position (P0).

7. The two-wheeled vehicle according to any of previous claims wherein said direction signaling device (12) comprises at least a first and a second button configured for manually triggering said first, second, third and fourth signal, preferably said first and second buttons are hand-controlled or feet-controlled buttons.

8. The two-wheeled vehicle according to any of claims 1 to 6 wherein the direction signaling device 12 is a voice-controlled direction signaling device comprising a microphone for receiving at least four pre-defined keywords expressed by a rider of the two-wheeled vehicle for triggering the generation of respectively the first, second, third and fourth signal, preferably the microphone is attachable to a helmet of the rider, and wherein the voice-controlled direction signaling device is configured for generating the first, second, third or fourth signal when a corresponding key-word is received through the microphone.

9. The two-wheeled vehicle according to any of claims 1 to 6 wherein said direction signaling device (12) comprises a road detection device configured for monitoring a road followed by the two-wheeled vehicle, and a data processing apparatus configured for receiving data from the road detection device and for identifying an upcoming left turn and an upcoming right turn, preferably the road detection device comprises any of a camera, a radar, a lidar, a gps navigation system, or a combination thereof.

10. The two-wheeled vehicle according to claim 9 wherein said data processing apparatus is configured for generating said first signal when the left turn identified reaches a point on the road for starting entering the identified left turn, generating said second signal when reaching a point on the road for starting coming-out of the left turn identified, generating said third signal when the right turn identified reaches a point on the road for starting entering the identified right turn, and generating said fourth signal if reaching a point on the road for starting coming-out of the right turn identified, preferably said data processing apparatus is configured to apply a AI algorithm for generating said first, second, third and fourth signals.

11. The two-wheeled vehicle according to any of previous claims wherein the steering aid system (10) is configured for reducing the tilting angle (φ) of the two-wheeled vehicle when taking a left or a right turn by at least 4°, preferably by at least 6°, more preferably by at least 8°, and wherein said reduction of the tilting angle is defined as a difference in tilting angle observed when taking the same left or right turn at the same speed with the steering aid system activated and deactivated for a rider having a weight equal or lower than 100 kg or for a rider and passenger having a combined weight equal or lower than 100 kg.

12. The two-wheeled vehicle according to any of previous claims wherein the steering aid system (10) is configured such that when no rider and no passenger is seated on the two-wheeled vehicle and when moving the centre of mass of the battery (M_{B}) from the start position (P0) to the first end position (P 1) the centre of mass of the two-wheeled vehicle (M_{MC}) is rotated towards the left-hand side of the central plane (CP) by a maximum angle (Δφmax), and when moving the centre of mass of the battery (M_{B}) from the start position (P0) to the second end position (P2) the centre of mass of the two-wheeled vehicle (M_{MC}) is rotated towards the right-hand side of the central plane (CP) by the maximum angle (Δφmax), and wherein said rotation of the centre of mass of the two-wheeled vehicle (M_{MC}) is around a tilting axis (15) of the two-wheeled vehicle, wherein the tilting axis (15) is defined as an intersection between the central plane (CP) and a road surface (H) the front and rear wheel are resting on, and wherein said maximum angle (Δφmax) is at least least 10°, preferably at least 15°, more preferably at least 20°.

13. The two-wheeled vehicle according to any of previous claims comprising a weight sensor for measuring a weight of a rider or a combined weight of a rider and one or more passengers of the two-wheeled vehicle or a user interface for entering a weight of the rider or a combined weight of the rider and the one or more passengers of the two-wheeled vehicle.

14. The two-wheeled vehicle according to claim 13 wherein the controller (13) is configured for determining based on said weight a first rider specific position for the centre of mass (M_{B}) of the battery between the start position (P0) and the first end position (P 1) and a second rider specific position between the start position (P0) and the second end position (P2), and wherein said moving of the centre of mass from the start position towards the first end position is stopped when the first rider specific position is reached, and wherein said moving of the centre of mass from the start position (P0) towards the second end position (P2) is stopped when the second rider specific position is reached.

15. The two-wheeled vehicle according to any of previous claims comprising one or more inclination sensors for measuring the tilting angle (φ) of the two-wheeled vehicle while taking a left or a right turn, wherein the tilting angle is an angle measured between the central plane (CP) and a vertical plane (V) perpendicular to a road surface (H) the two-wheeled vehicle is riding on such that when the tilting angle is zero the central plane (CP) is parallel with the vertical plane (V), and wherein the controller (13) is configured for controlling the movement of the position of the centre of mass (M_{B}) of the battery between the start position (P0) and the first end position (P1) and between the start position (P0) and the second end position (P2) such that during taking of a left turn the central plane (CP) is either parallel with the vertical plane (V) or the central plane is tilted to the left-hand side of the vertical plane (V) and during taking of a right turn the central plane (CP) is either parallel with the vertical plane (V) or the central plane is tilted to the right-hand side of the vertical plane (V).
